# EUROPEAN PATENT SPECIFICATION

(11) **EP 3 085 600 B1**
(45) Date of publication and mention of the grant of the patent: **27.11.2019**
(21) Application number: 15164938.1
(22) Date of filing: 23.04.2015
(51) Int. Cl.: B62B 5/00, B62B 1/10

(54) **MOTOR DRIVEN SHOPPING TROLLEY**
MOTORISIERTER EINKAUFSWAGEN
CHARIOT D'ACHATS MOTORISÈ

(43) Date of publication of application: 26.10.2016
(73) Proprietor: Fortuna Urbis S.r.l., 00153 Roma (IT)
(72) Inventor: Santarelli, Paola, I-00191 Roma (IT)
(74) Representative: Buzzi, Franco

(56) References cited:
- EP-A2- 2 320 173
- DE-A1- 19 723 973
- DE-U1- 20 317 246
- DE-U1-202010 016 831
- US-A1- 2004 084 880
- US-A1- 2013 274 973
- US-B1- 7 857 328

## Description

### Field of the invention

The present invention relates to shopping trolleys of the type comprising a container provided with wheels driven by an electric motor, and a handle for guiding the trolley.

### State of the prior art

Motor-driven shopping trolleys are known, for example, from the documents EP-1277642 and JP-2011467, the second of which envisages that the speed of the electric motor, and therefore of the trolley during its movement, can be varied and adjusted manually by the user.

From DE 20317246U1 a motor-driven trolley is known which is provided with wheels driven by an electric motor, with a handle for guiding the trolley, and with an electronic control unit configured to automatically activate the electric motor when the trolley, by means of the handle, is inclined into a transport position.

Motor-driven shopping trolleys are also known from DE 19723973A1 and US 2013/274973.

### Summary of the invention

The object of the present invention is to provide a motor-driven shopping trolley equipped with a series of unique characteristics able to significantly improve its functionality and the capacity to be able to be used advantageously, in particular by elderly people or those who have difficulty walking.

According to the invention, this object is achieved primarily by the features set forth in claim 1.

According to further advantageous characteristics, the motor-driven shopping trolley according to the invention can also be equipped with an extractable small chair to allow the user to have rest breaks if required, with a transmitter for calling for assistance in case of emergency, a GPS locator and a system to facilitate climbing steps, and the container can also be advantageously provided with thermal compartments for cooling and/or heating of its contents.

The shopping trolley according to the invention is especially designed for the elderly or those with physical problems, who go shopping unaccompanied, and who may feel the need to use a system which allows the elimination of transport difficulties, whilst at the same time ensuring a greater serenity thanks to the possibility of being able to send emergency messages in case of sudden illness or simple fatigue, and also to be easily located and remotely tracked for any eventuality.

### Brief description of the drawings

The invention will now be described in detail with reference to the attached drawings, provided purely by way of non-limiting example, in which:
- Figure 1 is a front perspective view of a motor-driven shopping trolley according to an embodiment of the invention,
- Figure 2 is a dorsal perspective view of the trolley,
- Figure 3 is a view analogous to Figure 1, in which the different components of the control system are schematized, as well as further auxiliary components of the trolley,
- Figure 4 is an exploded view of Figure 1,
- Figures 5-9 are side elevational views that exemplify the modes of operation of the trolley, and
- Figure 10 is a schematic perspective view showing a variant of the motor-driven shopping trolley according to the invention.

### Detailed description of the invention

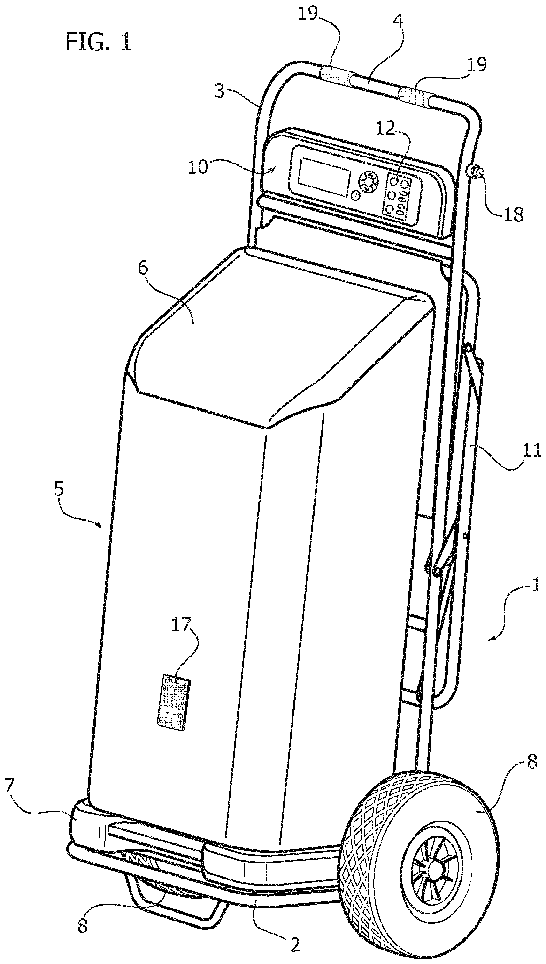

Referring initially to Figures 1, 2 and 4, the motor-driven shopping trolley according to the invention comprises a supporting frame 1, which forms a lower base 2 and an upright structure 3 shaped at its top in the form of a bar, or pulling or pushing handle 4.

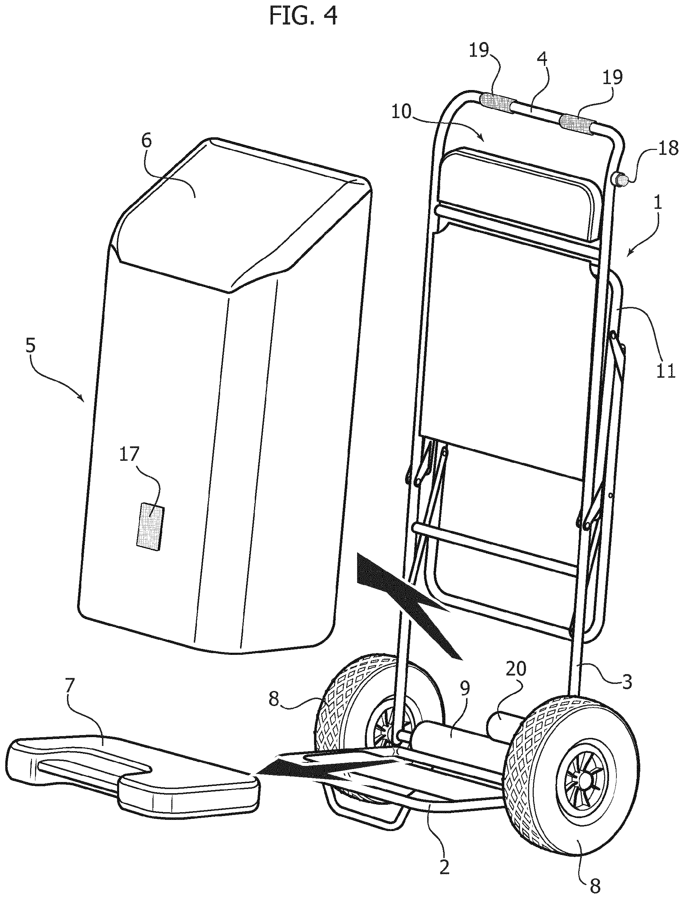

The frame 1 supports a rigid or flexible container 5, provided at the top with an openable cover 6 and resting with its lower part on the base 2. Quick coupling and release systems can be provided between the back of the container 5 and the upright structure 3, not shown in detail, to allow separating the container 5 from the supporting frame 1, in the manner represented in Figure 4. Furthermore, a rechargeable battery 7 is inserted between the container 5 and the base 2, also in a quickly-removable manner.

The support structure 1 is provided at the bottom, between the base 2 and the upright structure 3, with a pair of motor-driven wheels 8 controlled in rotation by a conventional-type reversible electric motor 9, with continuous current, powered by the battery 7 through an electronic control unit 10, which will be discussed below, provided with a pushbutton panel 12 for its setting and programming, fixed to the upright structure 3, for example under the handle 4.

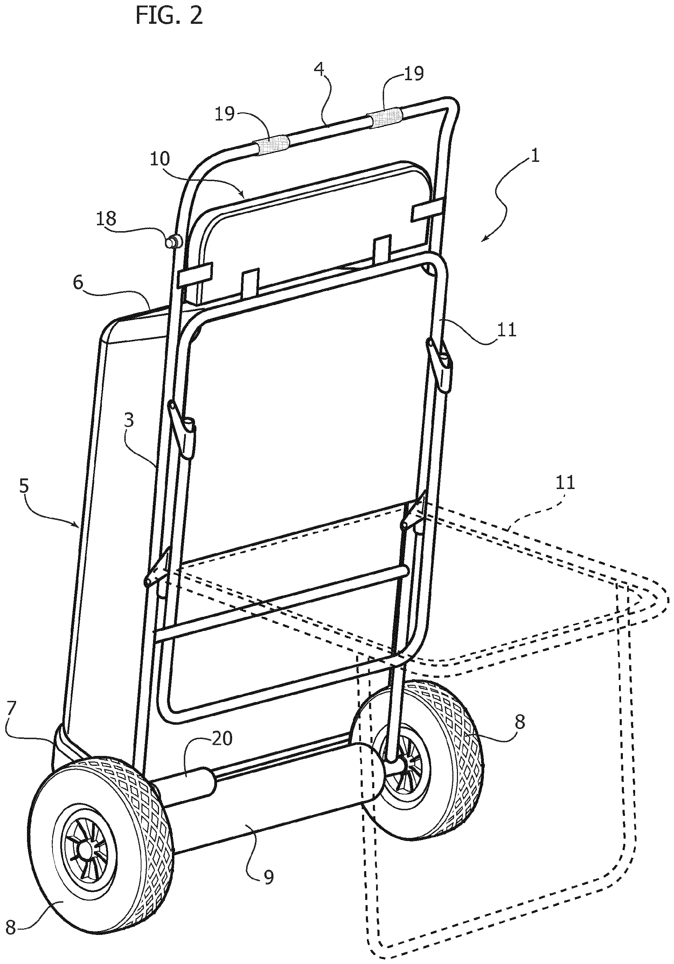

Numeral 11 indicates a seat carried by the upright structure 3, on the opposite side to the container 5, and having a foldable structure, from the rest condition shown in Figures 1 and 3-9, in which it is folded parallelly to the upright structure 3, and the position of use illustrated by dashed lines in Figure 2, in which it indeed defines a usable seat, when needed.

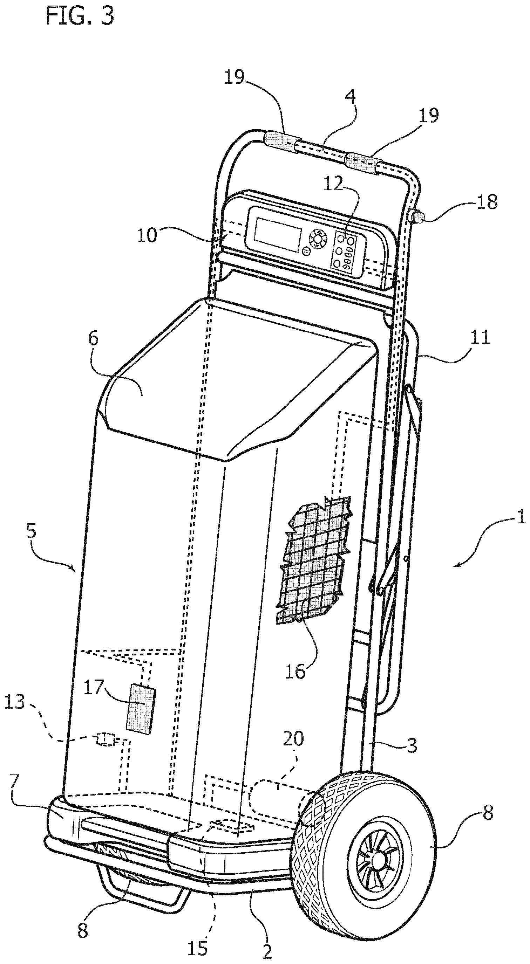

The electronic control unit 10, by means of which, as said, the electric motor 9 is controlled, is also powered by the rechargeable battery 7 and is operatively connected to a series of detectors and devices, of which the trolley according to the invention is equipped, in a unique way. In particular, and as is illustrated schematically in Figure 3, these detectors and devices comprise:
- one or more capacitive sensors 19 applied to the handle 4 in order to detect the grip by the hand or hands of the user;
- a unit with positioning sensors 13, for example of the accelerometric type, applied to the support frame 3 or to the container 5 and having the function of determining both the angular movement of the trolley between an essentially vertical upright condition and an inclined condition for its subsequent movement by means of the bar 4, and its inclination variations during movement, and also a possible alarm condition if the trolley is placed on the ground in an unusual horizontal condition. These sensors can also be integrated into the electronic card of the control unit 10. As will be seen, the extent of the angular acceleration and the inclination allows the automatic control of the electric motor 9 through the movements imparted to the trolley by the user;
- one or more load cells 15 arranged at the base of the container 5 for detecting the weight of its contents,
- an encoder or phonic wheel 20 for detecting the rotation speed of the motor 9 and therefore the axis of the wheels 8, settable by means of the pushbutton panel 12, and then maintained automatically, as clarified below, by the electronic control unit 10.

The additional equipment of which the trolley can be equipped according to the invention includes:
- a cooling unit 16 of the container 5, for example of the Peltier effect thermoelectric-type, controllable by means of the pushbutton panel unit 12, to cool or heat specific zones or compartments within the container 5;
- an LED light 17 applied to the front side of the container 5 and possibly operated automatically via a twilight detector and also intermittently;
- a GPS tracking system and a GSM transmission system for calling for assistance (not shown as they are conventional), incorporated into the electronic control unit 10, which can be activated in the case of emergency, for example via a quick-action switch 18 arranged in the vicinity of the bar 4 and easily reached, even in the case in which the user is seated on the unfolded seat 11.

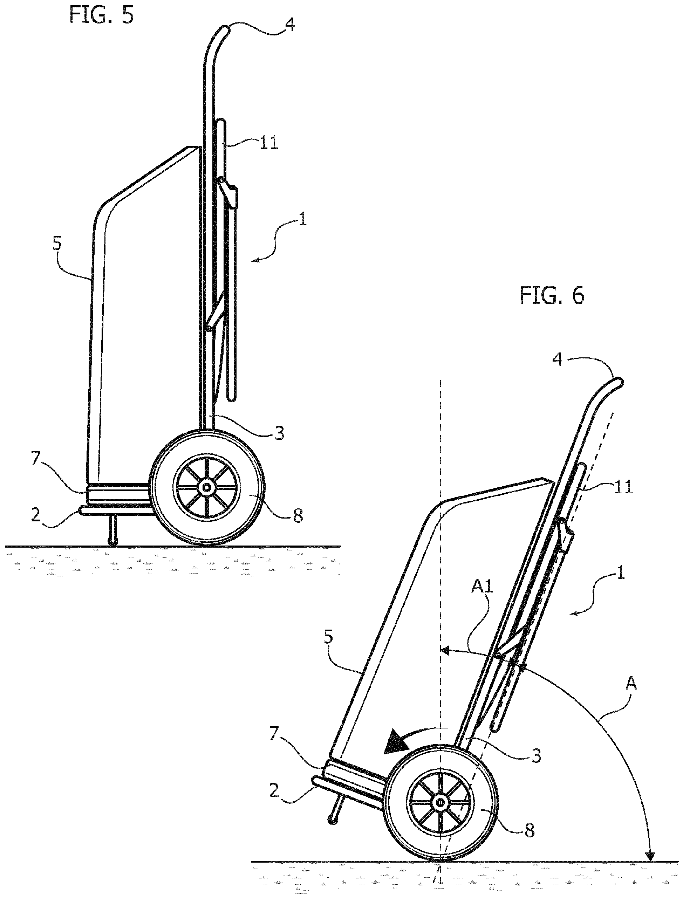

Referring now in greater detail to Figures 5 to 9, the automatic operation of the motor-driven shopping trolley according to the invention will be described, driven by the electronic control 10 as a function of the signals coming from the sensors referred to above.

Starting from the rest condition shown in Figure 5, in which the trolley is stably positioned in an essentially vertical upright position, it is assumed that the user holds the bar 4 so as to activate the capacitive sensors 19. This causes the automatic activation of the electronic control unit 10 as well as the other sensors connected to it.

Starting from this condition, to start the electric motor 9, and therefore to control the operation in rotation of the wheels 8 to produce the automatic advancing of the trolley, it is necessary to carry out two actions: firstly, the trolley should be inclined from the vertical position to an inclined position, as shown in Figure 6, so that the accelerometric sensor 13 detects the angular movement and transmits a first consent signal to the control unit 10. The angle within which the sensor transmits the consent to the unit 10 will be, for example, that indicated by A, while for the limited initial angle, indicated with A1, there is no consent. This angle A1 may be set by means of the pushbutton panel 12 of the control unit 10, for example according to the height of the user and possibly to the inclination of the ground.

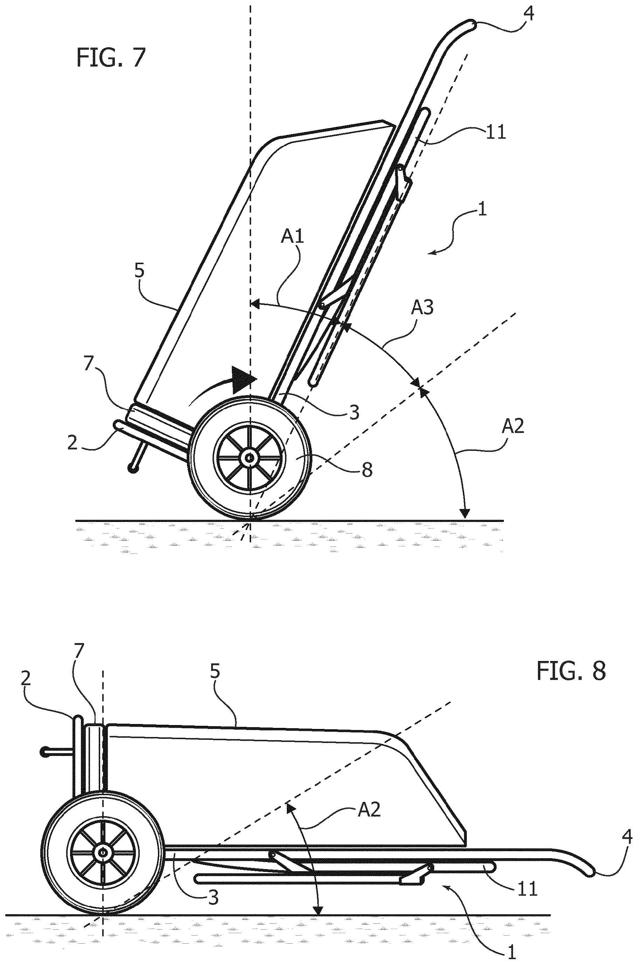

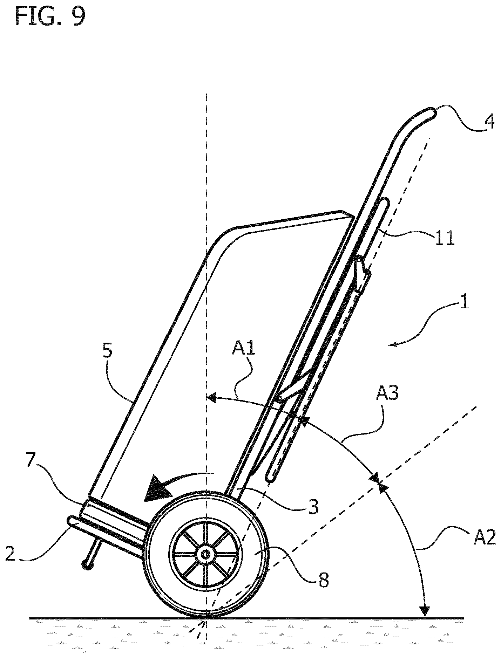

The second action for the consent to the electronic unit 10 is provided by the same electric motor 9, following a first impulse in rotation imparted to it by the wheels 8 when the trolley begins to be pulled (Figure 7) or pushed (Figure 9) by means of the bar 4. In this case, the speed of rotation of the motor 9 and therefore of the wheels 8, and consequently the speed of the pushing or pulling movement of the trolley, is set to a value that the user can select via the pushbutton panel 12 of the unit 10, and kept constant by means of the signals coming from the encoder 20. During the movement, the electric motor 9 will then be kept active at the speed set, only within a limited angular range A3 (Figures 7 and 9) detected by the sensor 13, comprised between the minimum angle A1 and the maximum angle A2, less than and greater than, respectively, the correct angle for pulling or pushing the trolley. In particular, the angle A2 includes the essentially horizontal condition of the trolley shown in Figure 8, possibly indicative of some abnormality such as its release, either desired or accidental, by the user.

The electronic unit 10 is also arranged so as to keep the speed selected by the user constant, irrespective of the uphill or downhill slope of the path, or it can be set so as to vary the speed simply due to a greater or lesser inclination imparted to the trolley through the bar 4, within the angular range A3.

The speed of movement of the trolley is also independent of the load of the trolley, or rather of the weight of the goods within the container 5, thanks to the detection operated by the load cell 15 through which the electronic control unit 10 can correspondingly vary the speed of rotation of the electric motor 9.

When the trolley is rotated within the angular range A1 or is within the angular range A2, the activation of the motor 9 is interrupted and the trolley stops automatically. The same condition occurs in the case of release of the capacitive sensors 19 applied to the handle 4.

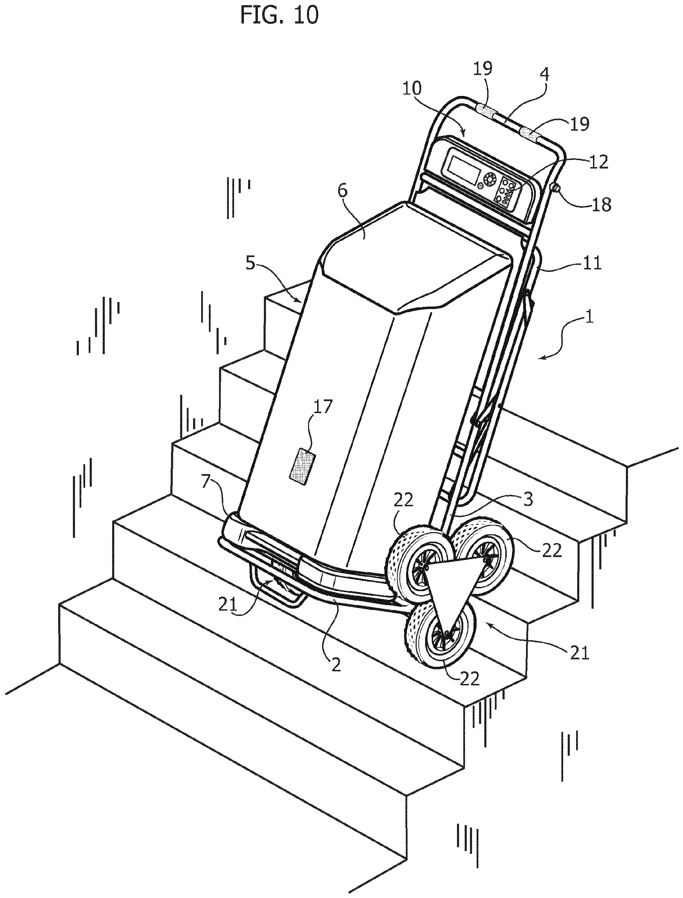

According to a further characteristic of the invention, the trolley according to the invention can be equipped with a support system to facilitate the crossing of steps and stairs, or obstacles in general, so as to reduce the effort required by the user in such occurrences. This system can, for example, be of the type schematically represented in Figure 10, in which each wheel 8 is replaced by an appliance 21 formed by a set of three wheels 22 arranged in a triangle and equipped with a motion of revolution, for example automatically driven when an obstacle sensor (not shown) detects the presence of a step, and a further sensor associated with the appliance 21 determines that only one of the wheels 22 is resting on the ground. In this, case the appliance 21 is rotated so as to climb the step.

Alternatively, the support system can provide for the use of a mechanical or pneumatic lifting jack, or a kinematic mechanism with motor-driven levers, for example, of the type known from document US-6164398.

In summary, the unique innovations of which the motor-driven shopping trolley according to the invention is equipped are summarized as follows:
- the engine is automatically activated by simply inclining the trolley and starting to pull it or push it: the choice by the user determines the direction of rotation of the motor and therefore the advancing direction of the trolley;
- the speed can be kept constant, irrespective of the slope of the path and irrespective of the weight of the load, without the need for manual adjustment;
- the trolley is equipped with a seat for resting, and also with an automatic call system to predetermined numbers by means of GSM transmission and a GPS tracking device;
- the container includes one or more thermal compartments with temperatures adjustable by the user to heat or cool the contents;
- a system can be provided for facilitating the climbing of steps.

Of course, the details of construction and the embodiments of the trolley may be widely varied with respect to what is described and illustrated without departing from the scope of the invention as defined by the following claims.

## Claims

1. A motor-driven shopping trolley comprising a container (5) provided with wheels (8) driven by an electric motor (9), a handle (4) for guiding the trolley, an electronic control unit (10) configured to automatically activate the electric motor (9) when the trolley, by means of said handle (4), is inclined into a transport position, said electronic control unit (10) being operatively connected to at least one capacitive sensor (19) applied on the handle (4) to detect the grip of a user's hand and to a positioning sensor (13) for determining an angular movement of the trolley, **characterized in that** consent to the electronic control unit (10) to activate said electric motor (9) is provided following a first impulse in rotation imparted thereto by the wheels (8) when the trolley begins to be pulled or pushed by means of said handle (4), and **in that** said electronic control unit (10) is also configured to maintain a selected speed of movement of the trolley constant irrespective of the slope of the path.

2. A trolley according to claim 1, **characterized in that** said electronic control unit (10) is further configured to select the speed of movement of the trolley.

3. A trolley according to claim 1 or 2, **characterized in that** said electronic control unit is further configured to keep the speed of trolley movement constant, irrespective of the load within the container (5).

4. A trolley according to one or more of the preceding claims, **characterized in that** it is equipped with a foldable seat (11).

5. A trolley according to one or more of the preceding claims, **characterized in that** the container (5) is equipped with a heating or cooling system (16).

6. A trolley according to one or more of the preceding claims, **characterized in that** it is equipped with a GSM calling device and with a GPS tracking device.

7. A trolley according to one or more of the preceding claims, **characterized in that** the container (5) is also equipped with an automatically-activated luminous device (17) .

8. A trolley according to one or more of the preceding claims, **characterized in that** it is also equipped with a support system (21) for crossing obstacles or steps.

## Patentansprüche

1. Motorisierter Einkaufswagen, umfassend einen Behälter (5), der mit Rädern (8) versehen ist, die von einem Elektromotor (9) angetrieben werden, einen Griff (4) zum Führen des Wagens, eine elektronische Steuereinheit (10), die dazu ausgestaltet ist, den Elektromotor (9) automatisch zu aktivieren, wenn der Wagen mittels des Griffs (4) in eine Transportposition geneigt wird,
die elektronische Steuereinheit (10), die wirkverbunden ist mit mindestens einem kapazitiven Sensor (19), der auf dem Griff (4) angebracht ist, um das Greifen einer Benutzerhand zu erfassen, und mit einem Positionssensor (13) zum Bestimmen einer Winkelbewegung des Wagens,
**dadurch gekennzeichnet, dass**
der Zugang zur elektronischen Steuereinheit (10), um den Elektromotor (9) zu aktivieren, nach einem ersten Drehimpuls, der durch die Räder (8) übermittelt wird, bereitgestellt wird, wenn der Wagen beginnt, mittels des Griffs (4) gezogen oder geschoben zu werden, und
dass die elektronische Steuereinheit (10) auch dazu ausgestaltet ist, eine ausgewählte Bewegungsgeschwindigkeit des Wagens unabhängig von der Steigung des Weges konstant zu halten.

2. Wagen nach Anspruch 1; **dadurch gekennzeichnet, dass** die elektronische Steuereinheit (10) ferner dazu ausgestaltet ist, die Bewegungsgeschwindigkeit des Wagens zu wählen.

3. Wagen nach Anspruch 1 oder 2, **dadurch gekennzeichnet, dass** die elektronische Steuereinheit ferner dazu ausgestaltet ist, die Geschwindigkeit der Wagenbewegung unabhängig von der Last innerhalb des Behälters (5) konstant zu halten.

4. Wagen nach mindestens einem der vorangehenden Ansprüche, **dadurch gekennzeichnet, dass** er mit einem klappbaren Sitz (11) ausgestattet ist.

5. Wagen nach mindestens einem der vorangehenden Ansprüche, **dadurch gekennzeichnet, dass** der Behälter (5) mit einem Heiz- oder Kühlsystem (16) ausgestattet ist.

6. Wagen nach mindestens einem der vorangehenden Ansprüche, **dadurch gekennzeichnet, dass** er mit einem GSM-Rufgerät und mit einem GPS-Ortungsgerät ausgestattet ist.

7. Wagen nach mindestens einem der vorangehenden Ansprüche, **dadurch gekennzeichnet, dass**
der Behälter (5) auch mit einer automatisch aktivierten Leuchtvorrichtung (17) ausgestattet ist.

8. Wagen nach mindestens einem der vorangehenden Ansprüche, **dadurch gekennzeichnet, dass** er auch mit einem Stützsystem (21) zum Überqueren von Hindernissen oder Stufen ausgestattet ist.

## Revendications

1. Chariot de courses motorisé comprenant un contenant (5) doté de roues (8) entraînées par un moteur électrique (9), une poignée (4) pour guider le chariot, une unité de commande électronique (10) configurée pour activer automatiquement le moteur électrique (9) lorsque le chariot, au moyen de ladite poignée (4), est incliné dans une position de transport, ladite unité de commande électronique (10) étant raccordée de manière opérationnelle à au moins un capteur capacitif (19) appliqué sur la poignée (4) pour détecter la préhension de la main d'un utilisateur et à un capteur de positionnement (13) pour déterminer un mouvement angulaire du chariot, **caractérisé en ce que** le consentement pour l'unité de commande électronique (10) d'activer ledit moteur électrique (9) est fourni suite à une première impulsion en rotation communiquée à cette dernière par les roues (8) lorsque le chariot commence à être tiré ou poussé au moyen de ladite poignée (4), et **en ce que** ladite unité de commande électronique (10) est également configurée pour maintenir une vitesse de déplacement sélectionnée du chariot, constante indépendamment de l'inclinaison du parcours.

2. Chariot selon la revendication 1, **caractérisé en ce que** ladite unité de commande électronique (10) est en outre configurée pour sélectionner la vitesse de déplacement du chariot.

3. Chariot selon la revendication 1 ou 2, **caractérisé en ce que** ladite unité de commande électronique est en outre configurée pour maintenir la vitesse de déplacement du chariot constante, indépendamment de la charge à l'intérieur du contenant (5).

4. Chariot selon une ou plusieurs des revendications précédentes, **caractérisé en ce qu'**il est équipé d'un siège pliable (11).

5. Chariot selon une ou plusieurs des revendications précédentes, **caractérisé en ce que** le contenant (5) est équipé d'un système de chauffage ou de refroidissement (16).

6. Chariot selon une ou plusieurs des revendications précédentes, **caractérisé en ce qu'**il est équipé avec un dispositif d'appel GSM et avec un système de traçage GPS.

7. Chariot selon une ou plusieurs des revendications précédentes, **caractérisé en ce que** le contenant (5) est également équipé d'un dispositif lumineux (17) activé de manière automatique.

8. Chariot selon une ou plusieurs des revendications précédentes, **caractérisé en ce qu'**il est également équipé d'un système de support (21) pour franchir des obstacles ou des marches.
